# EUROPEAN PATENT APPLICATION

(11) **EP 1 295 752 A2**
(43) Date of publication of application: **26.03.2003**
(21) Application number: 02020688.4
(22) Date of filing: 13.09.2002
(51) Int. Cl.: B60N 2/14

(54) **Aircraft seat with roller ball-assisted motion**

(30) Priority: 21.09.2001 US 960754
(71) Applicant: E R D A, INC., Peshtigo, Wisconsin 54157 (US)
(72) Inventor: Brandt, Michael D., Marinette, Wisconsin 54143 (US); Bachleitner, Ronald W., Peshtigo, Wisconsin 54157 (US); Szapa, Terry J., Menominee, Michigan 49858 (US)
(74) Representative: Jehle, Volker Armin

(57) **Abstract**

An adjustable chair is disclosed which can be used in aircraft, motor homes, or the like. In an embodiment, the chair includes a seat mounted on a base such that the weight of the seat rests on roller ball assemblies disposed on a top surface of the base. The roller ball assemblies advantageously reduce friction between the seat and the base and improve translational and rotational adjustment of the seat.

## Description

### FIELD OF THE INVENTION

The present invention relates to an adjustable chair for aircraft, recreational vehicles and the like, and relates more particularly to a chair having a single mechanism by means of which lateral, longitudinal and swiveling movement can be effected.

### BACKGROUND

Many airplanes, particularly corporate aircraft, have club or lounge sections equipped with chairs capable of various adjustments, including fore-and-aft, lateral, swiveling, and reclining movement, or various combinations of these. At least during takeoff and landing, the chair is normally locked in a fore or aft facing position with the back in an upright position. When the aircraft is not in a takeoff or landing mode, the chair can be moved in the directions indicated, swiveled, or reclined to any desired position of the occupant, within the travel limits of the chair mechanism.

Furthermore, it has become customary to include adjustable seats in recreational vehicles to permit the driver's and passenger's seats to face forward when traveling and to face in an arbitrary orientation when the vehicle is parked.

Previously, adjustable chairs of the type described normally accommodated longitudinal and lateral travel by tracks, with the actual movement being performed manually or by power assisted means. The longitudinal and lateral movement has been typically indexed by pins or friction locking, and the swiveling movement of the chair has normally been indexed by means of pins. For example, some chairs friction lock the seat to the base by biasing the seat against fixed, solid buttons disposed on a top surface of a base. However, this is not optimal.

Regardless of the type of mechanism employed for accomplishing movement in the several directions indicated, prior art adjustable chairs of this general type have been commonly characterized as having a non-rigid feeling when locked, have been relatively inconvenient to adjust by virtue of the locking pins which require manipulation by the occupant, and by the relatively limited positions of movement. Where a wide range of movement has been provided for in prior art adjustable chairs, the mechanisms permitting such adjustments have been uniformly characterized by their relatively complicated and thus costly construction.

### SUMMARY

Various embodiments disclosed herein provide an adjustable chair with a single mechanism by means of which the chair can be locked into position, or unlocked for horizontal or swiveling movement. The mechanism includes a lever accessible to the occupant adjacent the top and front of one of the arms of the chair, or any other conveniently accessible position on the movable seat.

The mechanism permitting adjustment of the chair is further characterized in that when locked, a rigid friction lock is effected between the stationary supporting base for the chair and the seat base. This rigidity is important not only in permitting the chair to be absolutely maintained in its locked position, but to essentially eliminate any movement between the seat base and the stationary supporting base which might lead to impaired operation of the adjustment mechanism.

One advantage of the adjustment mechanism is its simplified construction and consequent low manufacturing costs. There are a minimum of moving parts involved, thereby reducing maintenance problems and costs. The relatively simple construction permits part of the mechanism to be mounted within the seat portion of the chair, thereby greatly reducing the components exposed at the exterior of the chair. This permits the adjustment mechanism to be readily adaptable to various chair configurations, and also to constructions other than chairs where lateral and longitudinal motion is desired to be provided for, but in a controlled manner.

Another advantage is the infinite positions of movement into which the seat can be adjusted. There are limits to lateral and longitudinal sliding movement of the seat relative to the supporting base, but within these limits, the seat can be easily moved to an almost infinite number of positions and subsequently locked due, in part, to the roller ball assemblies which reduce friction between the seat and the base during adjustment. This reduction of friction permits the seat to be moved to the most comfortable position for the occupant.

A further advantage is that the adjustment mechanism is easily operated. It provides a large holding force when engaged yet requires only a small force for disengagement.

### DESCRIPTION OF THE DRAWINGS

Various embodiments are illustrated by way of example and not by way of limitation in the figures of the accompanying drawings in which like references indicate similar elements. It should be noted that references to "an," "one," or "various" embodiments in this disclosure are not necessarily to the same embodiment, and such references mean at least one.
Figure 1 is a side elevational view, partially in vertical section, of an embodiment showing the construction of the adjustable chair.
Figure 2 is a cross-sectional view of a roller ball assembly according to one embodiment.
Figure 3 is a partially exploded perspective view of the underside of the base according to one embodiment.
Figure 4 is a side elevational view, partially in vertical section, showing the roller cam mechanism in the released position.
Figure 5 is a perspective view of the cam from the roller cam mechanism.
Figure 6 is a side elevational, partially in vertical section, showing the roller cam mechanism in the clamped position with the chair at an extreme limit of travel.
Figure 7 is a top plan view of the roller cam mechanism in the released position.
Figure 8 is a perspective view of the base with roller ball assemblies disposed on the top surface of the base top plate.

### DETAILED DESCRIPTION

The various embodiments discussed herein overcome the problems in the existing art described above by providing roller ball assemblies which greatly reduce friction between the seat structure and the base, which permits increased maneuverability of the seat structure. In the following description, for the purposes of explanation, numerous specific details are set forth in order to provide a thorough understanding of the various embodiments. It will be apparent, however, to one skilled in the art that the various embodiments may be practiced without some of these specific details. The following description and accompanying drawings provide examples for the purposes of illustration. However, these examples should not be construed in a limiting sense as they are not intended to provide an exhaustive list of all possible implementations.

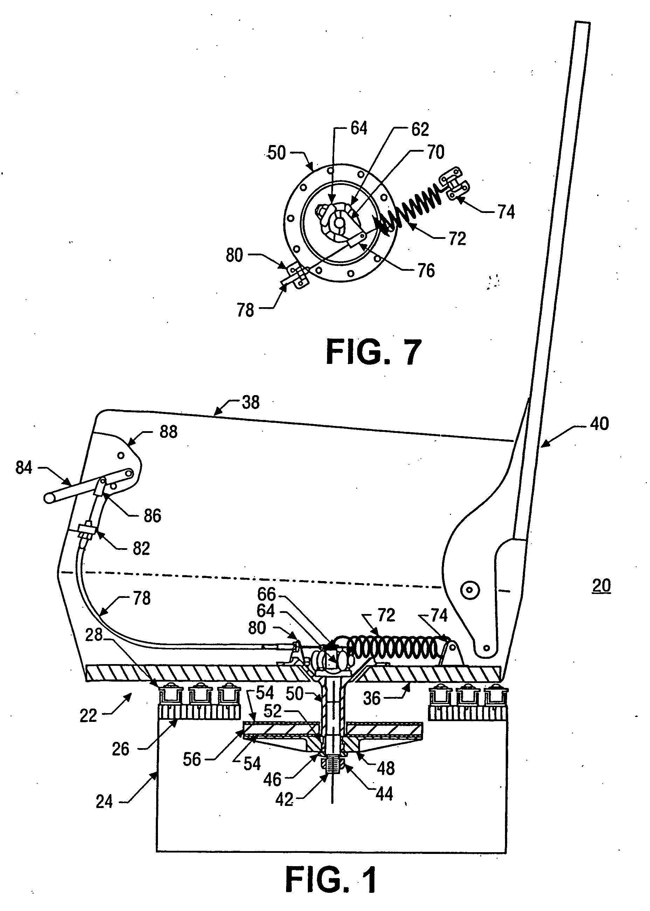

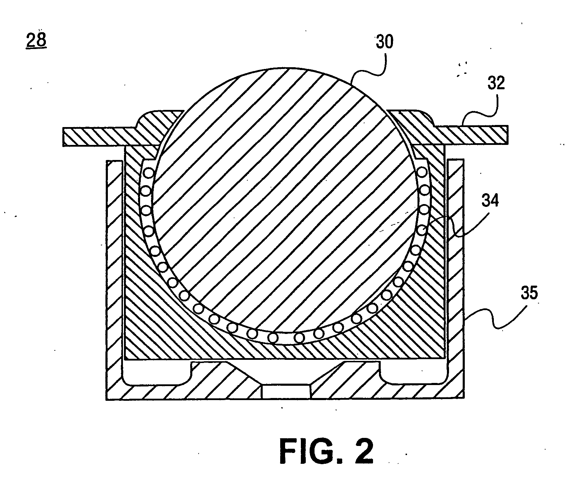

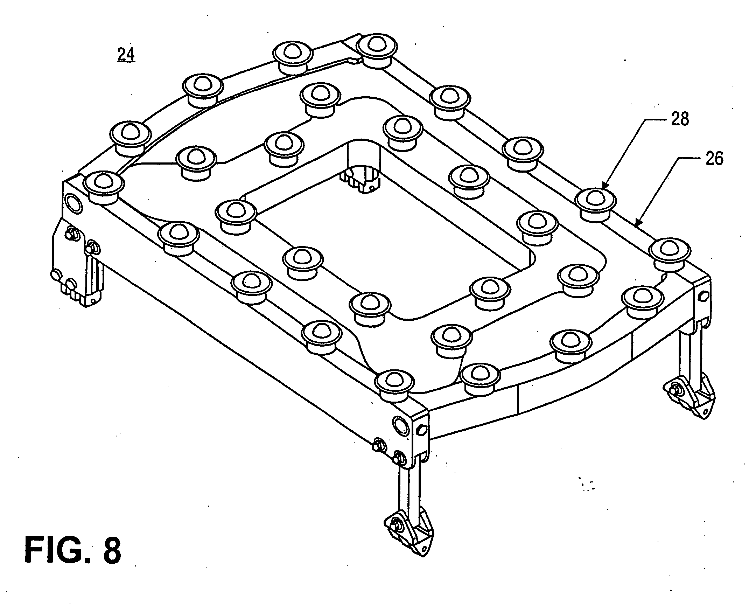

Referring now to the application drawings, wherein the parts are indicated by like reference numerals, and initially to **Figure 1**, adjustable chair 20 comprises seat structure 22 mounted on supporting base 24 which includes top plate 26. As best seen in **Figure 8,** roller ball assemblies 28 are attached to the top of plate 26 to support the weight of seat structure 22 (not shown in **Figure 8**). In the embodiment shown in **Figure 2**, roller ball assemblies 28 each comprise roller ball 30 disposed in housing 32 with a plurality of ball bearings 34 disposed between roller ball 30 and housing 32. As can be seen, roller ball 30 is positioned in housing 32 such that a portion of roller ball 30 protrudes from an opening in housing 32 to contact seat structure 22. In other embodiments, ball bearings 34 are omitted so that roller ball 30 is in direct contact with an inner wall of housing 32. Alternatively, ball bearings 34 could be disposed in recesses in the inner wall of housing 32 such that ball bearings 34 protrude from the recesses to contact roller ball 30.

Roller balls 30 and bearings 34 are made of appropriate materials having a low coefficient of friction. In various embodiments, the material having a low coefficient of friction is a synthetic material. In other embodiments, the material having a low coefficient of friction is metal. Thus, roller balls 30 permit seat structure 22 to slide freely on plate 26, since bottom surface 36 of seat structure 22 is metal. Bottom surface 36 contacts roller balls 30 to facilitate the sliding action of seat structure 22.

For clarity, only the mechanical structure of chair 20 is shown in the drawings. All upholstery and other nonmechanical structure has been omitted for clarity. Seat arm rest 38 and seat back 40 are shown schematically for context.

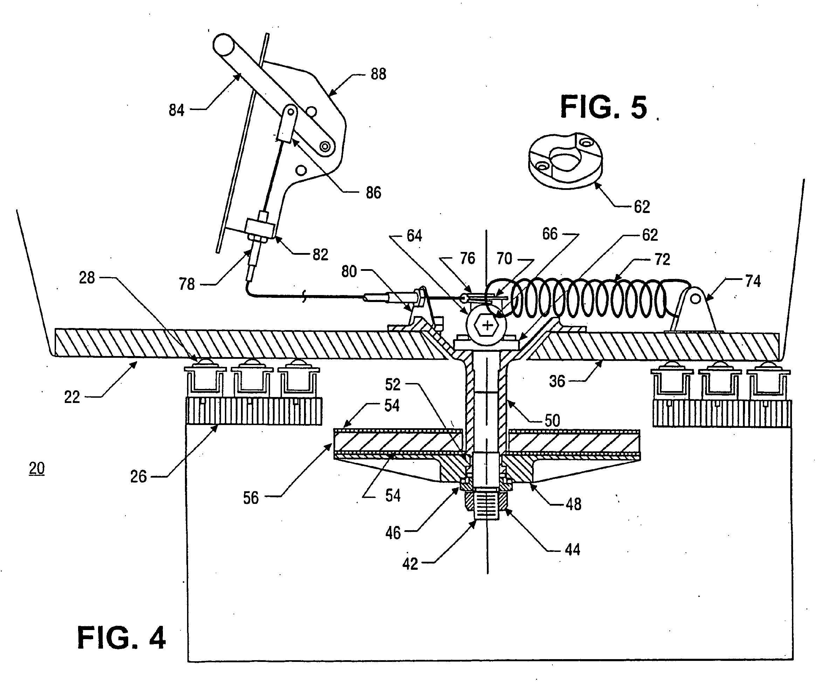

With particular reference to **Figures 4-7**, it will be seen that the various embodiments also include a mechanism for locking seat structure 22 onto top plate 26. This mechanism includes spindle 42 which receives self locking nut 44. Thrust bearing 46 is positioned against the lower surface of lower brake plate 48 which is vertically slidable on the outer surface of chair post 50. Chair post 50 receives splines 52 of lower brake plate 48, which permit vertical but not rotational movement of lower brake plate 48 relative to chair post 50.

Spindle 42 is vertically slidable inside of chair post 50 which is a hollow tubular structure. Accordingly, it can be seen that if spindle 42 is moved upwardly, upward pressure is applied to lower brake plate 48 through nut 44, and thrust bearing 46.

The upper surface of lower brake plate 48 has brake friction material 54 bonded or otherwise applied to it. Material 54 can be any conventional braking material. Upper brake plate 56 rests on lower brake plate 48 and is movable relative to lower brake plate 48. Brake material 54 is also bonded or otherwise applied to the upper and lower surface of upper brake plate 56 and to the lower surface of top plate 26 as well. The upper surface of upper brake plate 56 is positioned below top plate 26.

There is sufficient space between the hub of lower brake plate 48 and the bottom of chair post 50 to permit spindle 42 to move upwardly by a sufficient amount to cause a tight frictional engagement between lower brake plate 48 and upper brake plate 56 and between upper brake plate 56 and the bottom surface of top plate 26. In addition, there is a relatively large opening in top plate 26 to permit a relatively large adjustment of seat structure 22 before chair post 50 abuts top plate 26. This opening, although preferably rectangular, can be of any shape to permit sliding adjustment in any direction. Also, chair 20 can be turned in any angular orientation at any position of seat structure 22 relative to the opening in top plate 26. Accordingly, a large degree of translational and/or rotational adjustment is permitted.

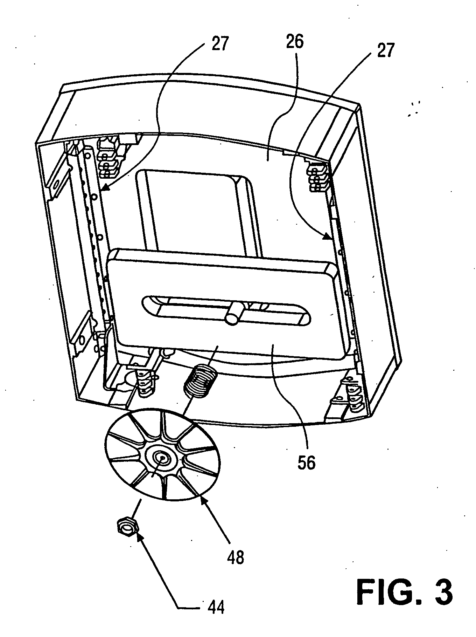

As shown in **Figure 1,** the outer diameter of lower brake plate 48 is less than the diameter of the opening in top plate 26. In an embodiment shown in **Figure 3**, upper brake plate 56 is rectangular to span the width of the opening of top plate 26 and is fastened to the lower surface of top plate 26 by runners 27 located along the shorter sides of upper brake plate 56. Although not shown, upper brake plate 56 has a lip which protrudes from the top side of upper brake plate 56, and runners 27 engage the lip. In other embodiments, runners 27 engage the entire thickness of upper brake plate 56.

Fore and aft motion of the seat structure 22 is achieved by moving upper brake plate 56 along with seat structure 22. Thus, there will always be enough area of upper brake plate 56 to insure that the opening in top plate 26 is bridged regardless of the position of seat structure 22.

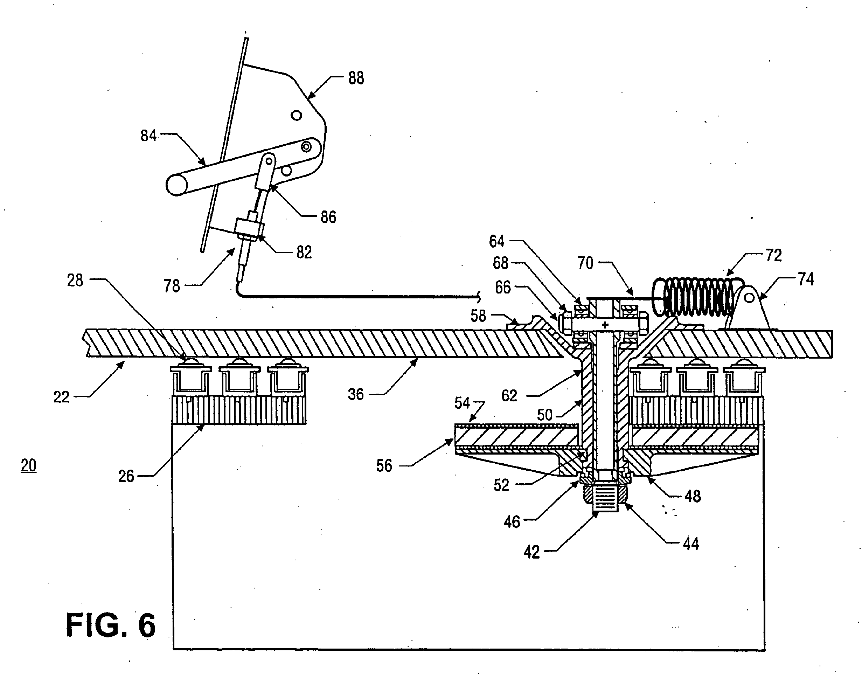

As shown in **Figure 4**, seat structure 22 is located centrally of the opening in top plate 26, and upper brake plate 56 fills the gap between lower brake plate 48 and the lower surface of top plate 26. **Figure 6** shows seat structure 22 moved to an extreme limit of travel where lower brake plate 48 and upper brake plate 56 are positioned beneath top plate 26 with a portion of the opening not supported, but, at a right angle to **Figures 4** and **6**, the opening is spanned by upper brake plate 56. Thus, contact around the entire circumference of the opening in top plate 26 is not required to provide a stable locking engagement of seat structure 22 since sufficient overlap between lower brake plate 48, upper brake plate 56 and top plate 26 will always be present to provide a secure engagement at any position between those shown in **Figures 4** and **6**.

Again, referring to **Figures 4** and **6**, it will be seen that chair post 50 is fixedly mounted to seat structure 22. An upper annular flange 58 is formed integrally with chair post 50 and rests on the top surface of the lower portion of seat structure 22. Chair post 50 is attached by fasteners through upper annular flange 58 to the top surface of the lower portion of seat structure 22.

Cam 62 is mounted on top of chair post 50 by the use of bolts or the like. The shape of cam 62 is shown most clearly in **Figure 5**. Cam 62 is ring-shaped and has an upper sinusoidal helix surface. Spindle 42 extends through chair post 50 and through the center of cam 62. As best shown in **Figure 6**, two roller bearings 64 are mounted on opposite sides of spindle 42 on a bolt or a shaft 66 whose central axis passes through spindle 42. Roller bearings 64 are held in position by nut 68 received on the threaded end of bolt or shaft 66.

Roller bearings 64 and cam 62 form a roller cam release mechanism which controls the vertical position of spindle 42. As spindle 42 is rotated, roller bearings 64 ride on the upper surface of cam 62, producing a non-linear vertical displacement of spindle 42. Accordingly, when roller bearings 64 ride to the highest point on cam 62, upward pressure is applied through lower brake plate 48 and upper brake plate 56 to top plate 26, thereby locking seat structure 22 in position. When roller bearings 64 are moved to the lowest position on cam 62, the pressure from the brake plates is released, and seat structure 22 is permitted to freely slide upon roller ball assemblies 28, thereby permitting the occupant to change the seat orientation to any translational or rotational position desired. **Figure 4** shows the released position of the roller cam mechanism where the seat is unlocked, and **Figure 1** shows the locked position of the roller cam release mechanism.

Referring to **Figures 1, 6** and **7**, it will be seen that lever 70 is attached to the upper surface of spindle 42 by bolts, screws or the like. Spring 72 has one end attached to lever 70 and a second end attached to a spring bracket 74, which is mounted on seat structure 22. Spring 72 keeps the roller cam release mechanism in the locked position by pulling roller bearings 64 to the highest point on cam 62. The slope of cam 62 is zero at locked position giving neutral stability. The helix surface of cam 62 is also undercut so that roller bearings 64 come up against neutral stops at both ends of travel. Thus, spring 72 keeps roller bearings 64 against these neutral stops. First clevis 76 is also mounted on lever 70 for connecting the cable of cable assembly 78 to lever 70. The sheath of cable assembly 78 is connected through cable bracket 80 to seat structure 22. The opposite end of cable assembly 78 is connected to cable bracket 82, and the cable is connected to hand lever 84 through second clevis 86. Lever support 88 is mounted in a position to insure accessibility of lever 84. As shown in **Figure 1**, lever support 88 can be mounted to arm structure 38 of seat structure 22.

The roller cam mechanism is normally held in the locked position by spring 72, which rotates lever 70 to the position shown in **Figures 1** and **7.** To release the mechanism, hand lever 84 is moved to the position shown in **Figure 4,** which rotates lever 70. Lever 70 is attached to spindle 42, and rotation of lever 70 causes rotation of spindle 42. Roller bearings 64 ride on cam 62. Rotation of spindle 42 against spring 72 allows roller bearings 64 to drop to the lowest position on cam 62. It will be noted that since cam 62 has a very small incline with a zero slope in the locked position, the occupant of the seat is provided with a high mechanical advantage. That is, only the force of spring 72 must be overcome in order to release the roller cam mechanism. The amount of force required to release the roller cam mechanism can be adjusted by adjusting the length of lever 70.

With the roller cam release mechanism in the released position, seat structure 22 can be moved laterally, longitudinally and can be swiveled to any position desired. The lateral and longitudinal movement of the seat structure is only limited by the size and shape of the opening in top plate 26 and the size of lower brake plate 48. When seat structure 22 is in the desired position, hand lever 84 is released. Spring 72 rotates lever 70 to the original position (shown in **Figures 1** and **7**), which also returns hand lever 84 to the original position (shown in **Figure 1**).

When mounting seat structure 22 on base 24, nut 44 is adjusted until spring 72 can just overcome the forces applied by the brake plates against the roller cam mechanism. The position of nut 44 is maintained by a locking feature built into nut 44. Once the mechanism has been rigged, the only necessary adjustment to account for wear of brake material 54 is by adjustment of nut 44. Also, by removing nut 44, seat structure 22 can be removed from base 24.

Inclusion of upper brake plate 56 permits a greater amount of adjustability with a smaller base 24. As can be seen in **Figure 1**, to provide the same amount of adjustability without using upper brake plate 56, the size of base 24 would have to be increased to accommodate a larger lower brake plate 48. Thus, upper brake plate 56 permits a smaller base 24 to be used.

It will thus be seen that the various embodiments disclose an adjustment mechanism which is highly simplified in construction and requires a minimum of force to be applied by the user. Very few moving parts are involved and by release of the mechanism through the operating lever, the chair seat can be moved to its adjusted position and thereafter locked simply by releasing the operating lever.

It will be understood that changes can be made in the system without departing from the basic inventive concepts. For example, the roller bearings can be rotated to release the brake plates by means other than the cable illustrated. Other modifications to the various embodiments would be readily apparent to one of ordinary skill in the art. Accordingly, any such modifications and changes would not depart from the scope of the invention as set forth in the pending claims.

## Claims

1. An adjustment mechanism for a chair to permit movement of the chair, the adjustment mechanism comprising:
a base having a top plate with an opening formed therein;
a seat structure having a bottom member with an opening formed therein;
roller buttons interposed between the bottom of the seat structure and the top of the top plate to permit movement of the seat structure relative to the base, the roller buttons each comprising a roller ball disposed within a housing such that a portion of the roller ball protrudes from an opening in the housing to contact the seat structure;
a chair post coupled to the seat structure and extending downwardly through the opening in the seat structure and the opening in the top plate, the chair post being cylindrical and having a center opening, the chair post being smaller in lateral dimension than the opening of the top plate to permit movement of the chair post in any direction;
a shaft extending through the center opening in the chair post; and
a brake supported on a lower end of the shaft to frictionally engage the top plate of the base to lock the seat structure in an adjusted position, the brake being releasable to permit adjustment of the chair.

2. The adjustment mechanism of Claim 1, wherein the roller balls comprise a low coefficient of friction material.

3. The adjustment mechanism of Claim 1, wherein the brake comprises:
a lower brake plate; and
an upper brake plate disposed between the lower brake plate and the top plate, the upper brake plate having a central opening which is smaller than an outer dimension of the lower brake plate such that the upper brake plate overlaps the lower brake plate, the upper brake plate having an outer dimension which is greater than the opening in the top plate.

4. The adjustment mechanism of Claim 3, wherein the upper brake plate has a rectangular shape.

5. The adjustment mechanism of Claim 3, wherein the top plate comprises:
a plurality of runners.

6. The adjustment mechanism of Claim 5, wherein the upper brake plate is coupled to a lower surface of the top plate by the runners to prevent rotation of the upper brake plate.

7. The adjustment mechanism of Claim 1, further comprising:
a cam coupled to the chair post; and
a cam follower coupled to the shaft and positioned relative to the cam such that rotational movement of the shaft results in axial movement of the shaft.

8. The adjustment mechanism of Claim 7, wherein the cam comprises:
an upper cam surface, the cam and the cam follower positioned such that the cam follower rides along the upper cam surface as the shaft is rotated.

9. The adjustment mechanism of Claim 8, wherein the cam follower comprises:
a pair of bearings mounted on opposite sides of the shaft.

10. The adjustment mechanism of Claim 8, wherein the upper cam surface comprises:
sloped sections; and
sections with zero slope.

11. The adjustment mechanism of Claim 7, further comprises:
a lever extending radially from the shaft;
a cable attached to the lever; and
a cable actuating mechanism connected to the cable to cause rotation of the shaft in a first direction.

12. The adjustment mechanism of Claim 11, further comprising:
means for normally biasing the shaft in a second direction of rotation opposite to the first direction of rotation.

13. The adjustment mechanism of Claim 12, wherein the means for normally biasing the shaft comprises:
an elastically deformable member having a first end and a second end, the first end coupled to the lever and the second end coupled to a bracket which is coupled to the seat structure.

14. The adjustment mechanism of Claim 3, wherein the lower brake plate has an outer dimension which is smaller than the opening in the top plate member.

15. An adjustment mechanism for a chair to permit movement of the chair, the adjustment mechanism comprising:
a base having a top plate with an opening formed therein;
a seat structure having a bottom member with an opening formed therein;
roller buttons interposed between the bottom of the seat structure and the top of the top plate to permit movement of the seat structure relative to the base, the roller buttons each comprising a roller ball disposed within a housing such that a portion of the roller ball protrudes from an opening in the housing to contact the seat structure;
a chair post coupled to the seat structure and extending downwardly through the opening in the seat structure and the opening in the top plate, the chair post being cylindrical and having a center opening, the chair post being smaller in lateral dimension than the opening of the top plate to permit movement of the chair post in any direction;
a shaft extending through the center opening in the chair post; and
a brake supported on a lower end of the shaft to frictionally engage the top plate of the base to lock the seat structure in an adjusted position, the brake being releasable to permit adjustment of the chair, the brake comprising
a lower brake plate, and
a rectangular upper brake plate coupled by runners to a lower surface of the top plate and disposed between the lower brake plate and the top plate, the upper brake plate having a central opening which is smaller than an outer dimension of the lower brake plate such that the upper brake plate overlaps the lower brake plate, the upper brake plate having an outer dimension which is greater than the opening in the top plate.
